Europäisches Patentamt

European Patent Office

Office européen des brevets

(11) Veröffentlichungsnummer: **0 334 380**
**A2**

(12) # EUROPÄISCHE PATENTANMELDUNG

(21) Anmeldenummer: **89105300.1**

(51) Int. Cl.⁴: **F16L 21/08**

(22) Anmeldetag: **23.03.89**

(30) Priorität: **23.03.88 DE 8803949 U**

(43) Veröffentlichungstag der Anmeldung:
**27.09.89 Patentblatt 89/39**

(84) Benannte Vertragsstaaten:
**AT CH DE ES FR GB IT LI NL SE**

(71) Anmelder: **Eisenwerke Fried.Wilh. Düker GmbH & Co.**

**D-8782 Karlstadt(DE)**

(72) Erfinder: **Imhof, Erich**
**Fabrikstr. 13**
**D-8752 Laufach(DE)**
Erfinder: **Vorbeck, Manfred**
**Spessartstr. 56**
**D-8752 Laufach(DE)**

(74) Vertreter: **Patentanwälte Leinweber & Zimmermann**
**Rosental 7/II Aufg.**
**D-8000 München 2(DE)**

(54) **Schubgesicherte Steckmuffenverbindungsvorrichtung.**

(57) Bei der schubgesicherten Steckmuffenverbindungsvorrichtung für Muffenrohre (1) ist das Spitzende (3) des einen Rohres mit radialem Spiel in das einen Dichtring (8) aufweisende Muffenende (2) des anderen Rohres einschiebbar. Diesem ist ein vom Dichtring getrennt ausgebildeter Klemmring (14) mit einer Vielzahl von Klemmsegmenten (15) zuge ordnet, die in Umfangsrichtung jeweils durch eine anvulkanisierte Zwischenschicht aus Gummi o. dgl. miteinander verbunden sind und auf ihrer Innenfläche jeweils eine mit dem Spitzende zusammenwirkende Zahnung (17) aufweisen. Um die Vorrichtung auch bei Muffenrohren mit vergleichsweise einfach geformtem Muffenende zur Herstellung einer Steckmuffenverbindung heranziehen zu können, ist am Muffenende (2) eine durch radiale Durchmessererweiterung der Muffeninnenwand gebildete, in axialer Richtung offene Abdichtungskammer (7) für den Dichtring (8) vorgesehen. Dem Muffenende (2) ist ein der Halterung des Klemmrings (14) und der Kompression des Dichtungsrings (8) dienender Spannring (9) zugeordnet. Dieser umfaßt eine Mehrzahl von am Umfang gleichmäßig verteilten Spannschrauben (11), die am Muffenende (32) angreifen und über die die axiale Position des Spannrings (9) in Bezug auf das Muffenende unter Änderung des Maßes der Beaufschlagung von Klemmring (14) und/oder Dichtungsring (8) verstellbar ist.

Fig 1

## Schubgesicherte Steckmuffenverbindungsvorrichtung

Die Erfindung bezieht sich auf eine schubgesicherte Steckmuffenverbindungsvorrichtung, insbesondere für im Schleudergußverfahren hergestellte Muffenrohre, bei der das Spitzende des einen Rohres mit radialem Spiel in das einen Dichtring aufweisende Muffenende des anderen Rohres einschiebbar ist, dem ein vom Dichtring getrennt ausgebildeter Klemmring zugeordnet ist, welcher aus einer Vielzahl in Umfangsrichtung mit gegenseitigem Abstand angeordneten Klemmsegmenten besteht, die eine ballig ausgebildete äußere Mantelfläche aufweisen, in Umfangsrichtung jeweils durch eine anvulkanisierte Zwischenschicht aus Gummi o. dgl. miteinander verbunden sind und auf ihrer Innenfläche jeweils eine Zahnung aufweisen, die bei Auftreten von axialen Kräften durch Zusammenwirken der balligen Mantelfläche mit einer sich konisch zum äußeren Ende verjüngenden Innenfläche radial gegen das Spitzende drücken.

Bei einer bekannten Steckmuffenverbindungsvorrichtung dieser Art (DE-OS 36 07 231) sind am Muffenende der zu verbindenden Rohre axial versetzt und durch eine Stützschulter voneinander getrennt eine der Aufnahme des Dichtungsrings dienende Abdichtungskammer und eine Verriegelungskammer für die Aufnahme des Klemmrings vorgesehen. Die Verriegelungskammer wird durch eine sich zum Muffenende hin verjüngende Innenfläche der Rohrmuffe begrenzt. Für den Einsatz eine derartigen Steckmuffenverbindungsvorrichtung ist somit eine ganz spezielle Formgebung der Rohrmuffe in Abstimmung auf die Abmessung des Dichtungsrings einerseits und des Klemmrings andererseits Voraussetzung.

An dieser Stelle ist zu erwähnen, daß weiterhin eine Zug- und Schubsicherung für Schraubenmuffenverbindungen bekannt ist (DE-OS 34 19 633), die sich zur radialen Beaufschlagung des Klemmrings eines Druckrings bedient, der an seiner Außenseite ein Schraubgewinde aufweist, das in ein entsprechendes Innengewinde am Muffenende eingreift. Auch bei dieser Zug- und Schubsicherung für Schraubmuffenverbindungen ist in aufwendiger Weise eine spezielle Formgebung der Rohrmuffe Vorbedingung.

Der Erfindung liegt die Aufgabe zugrunde, die bekannte Steckmuffenverbindungsvorrichtung so weiter auszubilden, daß sich auch ein Muffenrohr mit vergleichsweise einfach geformtem Muffenende zur Herstellung einer Steckmuffenverbindung heranziehen läßt.

Die Steckmuffenverbindungsvorrichtung nach der Erfindung, bei der diese Aufgabe gelöst ist, zeichnet sich im wesentlichen dadurch aus, daß am Muffenende eine durch radiale Durchmessererweiterung der Muffeninnenwand gebildete, in axialer Richtung offene Abdichtungskammer für den Dichtring vorgesehen ist, daß dem Muffenende ein der Halterung des Klemmrings und der Kompression des Dichtungsrings dienender Spannring zugeordnet ist, der die sich konisch zum äußeren Ende hin verjüngende Innenfläche aufweist, an der die ballig ausgebildeten äußeren Mantelflächen der Klemmsegmente des Klemmrings zur Anlage gelangen, und daß dem Spannring eine Mehrzahl von am Umfang gleichmäßig verteilten Spannschrauben zugeordnet ist, die am Muffenende angreifen und über die die axiale Position des Spannrings in Bezug auf das Muffenende unter Änderung des Maßes der Beaufschlagung von Klemmring und/oder Dichtungsring verstellbar ist.

Diese Ausführung ist mit dem wesentlichen Vorteil verbunden, daß trotz des Einsatzes üblicher Muffenrohre ohne spezielle Muffenformgebung auf einfache Weise eine feste schubgesicherte sowie dichte Verbindung aufeinanderfolgender Rohre herstellbar ist.

Als im Hinblick auf eine einwandfreie Abdichtung besonders günstig hat es sich erwiesen, wenn der Spannring an seiner dem äußeren Ende abgewandten Seite einen zylindrischen Ringansatz aufweist, der sich mit einer quer zur Ringachse erstreckenden Stirnfläche auf dem Dichtungsring abstützt.

Bei einer abgewandelten, einfacheren Ausführung, bei der es des zylindrischen Ringansatzes des Spannrings nicht bedarf, stützt sich der vom Spannring beaufschlagte Klemmring in axialer Richtung auf dem Dichtungsring ab. Als sehr zweckmäßig hat es sich dabei erwiesen, wenn zwischen den Klemmring und den Dichtungsring ein Gleitring eingeschaltet ist.

Um eine einwandfreie Positionierung des Klemmrings mit seinen Klemmsegmenten in Bezug auf die konische Innenfläche des Spannrings bzw. die Außenfläche des Rohrspitzendes sicherzustellen, hat es sich als vorteilhaft erwiesen, wenn an den Klemmring ein am Spannring festlegbares, ihn tragendes Halteteil aus Elastomer angeformt ist. Dieses Halteteil hält in am Spannringstirnende festgelegtem Zustand den Klemmring in dem Spannringstirnende angenäherter Lage, aus der er beim Einschieben des Spitzendes des anderen Rohres in Abhängigkeit von den Abmessungstoleranzen mehr oder weniger axial verschoben wird. Der Klemmring gelangt beim Einschieben mit seinen Klemmsegmenten jedoch sogleich mit der konischen Spannringinnenfläche einerseits und über die Zahnung mit der Außenfläche des Spitzendes andererseits in wirksame Berührung und verbleibt in dieser Position, bis die erste Druckbeaufschlagung der Rohre erfolgt. Der Klemmring erfüllt dann sogleich ohne jede spürbare Verzögerung die von ihm geforderte Klemmfunktion.

Als im Hinblick auf eine einfache und sichere Handhabung besonders vorteilhaft hat es sich herausgestellt, wenn sich an das äußere Ende der konischen Innenfläche des Spannrings, an der die ballig ausgebildeten äußeren Mantelflächen der Klemmsegmente des Klemmrings zur Anlage gelangen, eine sich quer zur Spannringachse erstreckende Stirnfläche anschließt, die in eine etwa zylindrische Außenseite übergeht, und daß das durch einen Kragen gebildete Halteteil einen an der zylindrischen Außenseite des Spannrings zur Anlage gelangenden ringzylindrischen Abschnitt, einen sich anschliessenden, an der Spannringtirnfläche zur Anlage gelangenden ringscheibenförmigen Abschnitt sowie einen sich vom Innenrand der Spannringstirnfläche zum Klemmring erstreckenden Verbindungsabschnitt umfaßt, der in Abhängigkeit von den Außenabmessungen des einzuführenden Spitzendes zusammen mit dem Klemmring aufweitbar und dabei in axialer Richtung dehnbar ist. Der so ausgebildete Kragen läßt sich bequem durch Überschieben über das Spannringstirnende an letzterem festlegen. Außerdem ermöglicht der Verbindungsabschnitt eine zentrische Einführung des Spitzendes, wobei sich der Abschnitt in dem Maße aufweitet, wie dies erforderlich ist,um das Spitzende an den unmittelbar auf den Verbindungsabschnitt folgenden und sich in gleichem Maße aufweitenden Klemmring heran und in ihn hineinzuführen. Sobald die Klemmsegmente an der konischen Innenfläche des Spannringendes zur Anlage gelangen, stellen sie aufgrund der gleichzeitigen zwangsweisen Anlage an der Außenwand des eingeführten Spitzendes in besonders vorteilhafter Weise automatisch eine Rohrzentrierung sicher.

Als in weiterer Ausgestaltung sehr vorteilhaft hat sich eine Vorrichtung erwiesen, bei der an den Kragen eine nach Festlegung des Spannrings an der Rohrmuffe das Rohrinnere gegen Eintritt von Fremdkörpern bzw. Verschmutzungen schützende Abdeckung angeformt ist. Vor allem wenn Rohre verlegt werden, die mit einer Innenzementierung versehen sind, ist die Verwendung einer derartigen Abdeckung äußerst nützlich, da innenzementierte Rohre im Falle einer Verschmutzung erhebliche Reinigungsprobleme aufwerfen.

Die fragliche Abdeckung kann sehr einfach gestaltet sein, nämlich in Form einer flachen, elastichen Membran.

Um eine ausreichende Stabilität des Spannrings in belastetem Zustand, d.h. nach der Montage an der Rohrmuffe sicherzustellen, hat es sich als günstig erwiesen, wenn er gleichmäßig am Umfang verteilt achsparallele Bohrungen zur Aufnahme der Spannschrauben sowie einen sich im Abstand von und über die Stirnfläche des Muffenendes erstreckenden, Biegesteifigkeit verleihenden Ringkragen umfaßt. Dabei hat es sich als zweckmäßig erwiesen, wenn der Spannring am Umfang angeformte radiale Vorsprünge aufweist, die von den Bohrungen für die Spannschrauben durchsetzt sind.

Eine besonders praktische Handhabung bei Festlegung des Spannrings an der Rohrmuffe ist gewährleistet, wenn jede Spannschraube an ihrem einen Ende in ein Gewinde zur Aufnahme einer Spannmutter und an ihrem anderen Ende in eine sich quer vorerstreckende Haltenase ausläuft, die einen radial vorstehenden Muffenrand des Muffenrohres hintergreift.

Weitere Einzelheiten, Vorteile und Merkmale der Erfindung ergeben sich aus der folgenden Beschreibung und der Zeichnung, auf die bezüglich der Offenbarung aller nicht im

Text beschriebenen Einzelheiten ausdrücklich verwiesen wird. Es zeigen:

Fig. 1 einen Axialschnitt durch das Spitzende eines Rohres mit übergeschobenem Muffenende des angrenzenden Rohres und diesem zugeordnetem Spannring,

Fig. 2 einen Axialschnitt entsprechend der Ansicht der Fig. 1 zur Veranschaulichung einer abgewandelten Ausführung und

Fig. 3 einen Axialschnitt ebenfalls entsprechend Fig.1 zur Veranschaulichung einer weiteren abgewandelten Ausführung.

Wie aus der Zeichnung ersichtlich, weist jedes innenseitig mit einer Zementmörtelbeschichtung versehene Muffenrohr 1 an seinem einen Ende, dem Muffenende 2 eine Muffe auf, in die mit radialem Spiel das Spitzende 3 eines angrenzenden Muffenrohres 1 eingeschoben werden kann. Im Inneren der Muffe ist eine Ausnehmung 4 vorgesehen, die in bestimmten Grenzen eine Relativverschwenkung der Rohre 1 zuläßt. Im Anschluß an diese Ausnehmung ist in üblicher Weise eine Kammer 5 gebildet, die axial nach außen durch eine radial verlaufende Innenschulter 6 des Muffenendes 2 begrenzt ist. Ausgehend von der Innenschulter 6 ist am Muffenende eine durch eine radiale Durchmessererweiterung der Muffeninnenwand gebildete, in axialer Richtung offene Abdichtungskammer 7 vorgesehen. Diese dient der Lagesicherung eines Dichtrings 8 aus relativ weichem elastomeren Material. Dem Muffenende 2 ist ein Spannring 9 zugeordnet, der am Umfang gleichmäßig verteilt mehrere, vorzugsweise drei oder vier achsparallele Bohrungen 10 zur Aufnahme von Spannschrauben 11 sowie einen sich im Abstand von der und über die Stirnfläche des Muffendes 2 erstreckenden Biegefestigkeit verleihenden Ringkragen 12 aufweist. An seiner dem Spitzende 3 des folgenden Rohres 1 zugewandten Öffnungsseite weist der Spannring 9 eine sich konisch zum äußeren Ende hin verjüngende Innenfläche 13 auf, an der ein Klemmring 14 zur Anlage gelangt. Dieser Klemmring 14 besteht aus einer Vielzahl, beispielsweise vier in Umfangsrichtung mit gegenseitigem Abstand angeordneten Klemmsegmenten 15. Diese Klemmsegmente 15 sind in Umfangsrichtung jeweils durch eine nicht näher veranschaulichte anvulkanisierte Zwischenschichtaus Gummi od. dgl. miteinander verbunden. Auf ihrer der Innenfläche 13 zugewandten Seite weisen die Klemmsegmente 15 jeweils eine ballig ausgebildete äußere Mantelfläche 16 auf. Durch die Innenfläche 13 wird eine auf der Innenfläche der Klemmsegmente 15 jeweils vorgesehene Zahnung 17 bei Auftreten von axialen Kräften radial gegen das Spitzende 3 gedrückt.

Wie aus der Zeichnung hervorgeht, ist an den Klemmring 14 ein am Spannring 9 festlegbarer, ihn tragender Kragen 18 aus Elastomer angeformt. Dieser Kragen 18 umfaßt einen an der zylindrischen Außenseite 19 des Spannrings 9 zur Anlage gelangenden ringzylindrischen Abschnitt 20, einen sich anschließenden, an der Spannringstirnfläche 21 zur Anlage gelangenden ringscheibenförmigen Abschnitt 22 sowie einen sich vom Innenrand der Spannringstirnfläche zum Klemmring 14 erstreckenden Verbindungsabschnitt 23. Dieser ist in Abhängigkeit von den Außenabmessungen des einzuführenden Spitzendes 3 zusammen mit dem Klemmring 14 aufweitbar und dabei in axialer Richtung dehnbar.

Aus der Zeichnung geht ferner hervor, daß - in montiertem Zustand des Spannrings 9 - an den Kragen 18 eine das Rohrinnere gegen Eintritt von Fremdkörpern bzw. Verschmutzungen schützende, gestrichelt angedeutete Abdeckung 24 angeformt ist. Im veranschaulichten Ausführungsbeispiel ist die Abdeckung 24 in Form einer flachen elastischen Membran ausgebildet. Stattdessen kann sie auch sackförmig ausgebildet sein. In der Zeichnung ist auch angedeutet, daß im Bereich des Kragens 28 eine Materialschwächung bzw. Perforation 25 vorgesehen ist, die das leichte Abreißen bzw. Herausschneiden der Abdeckung 24 unmittelbar vor der Montage ermöglicht. Auf diese Weise sind Verschmutzungen der Innenräume der Rohre und Formstücke auf ihrem Transport und auf der Baustelle wirksam vermieden.

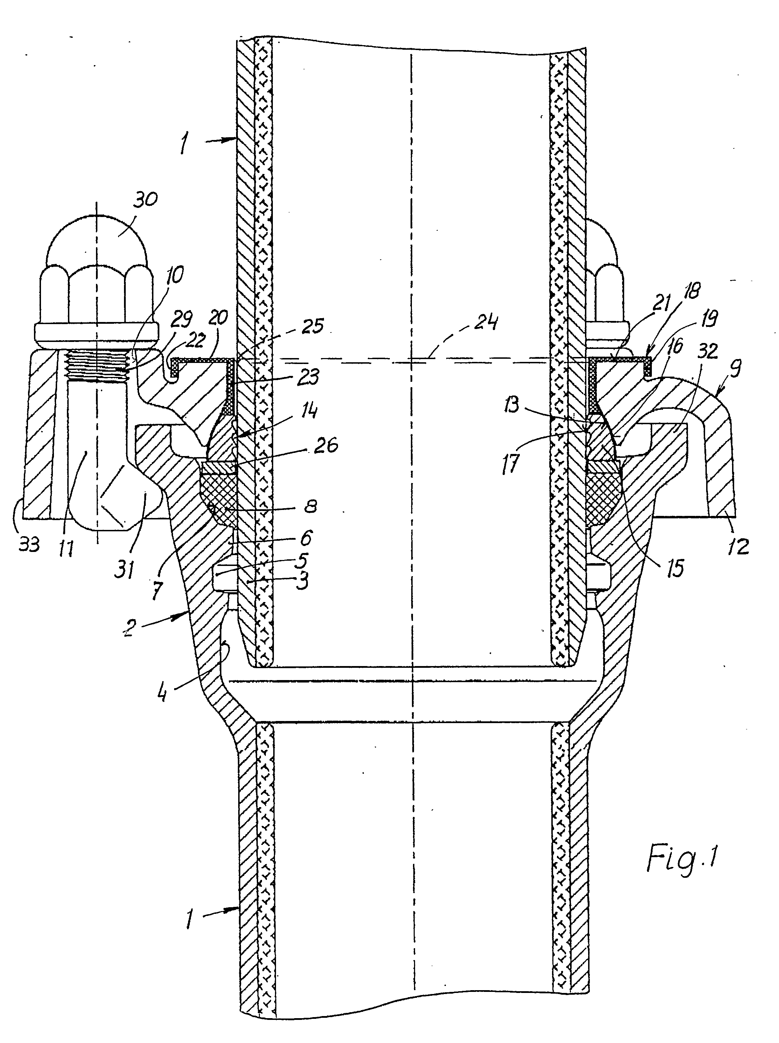

Aus Fig. 1 geht hervor, daß sich der vom Spannring 9 beaufschlagte Klemmring 14 in axialer Richtung auf dem Dichtungsring 8 abstützt, und zwar über einen zwischengeschalteten Gleitring 26.

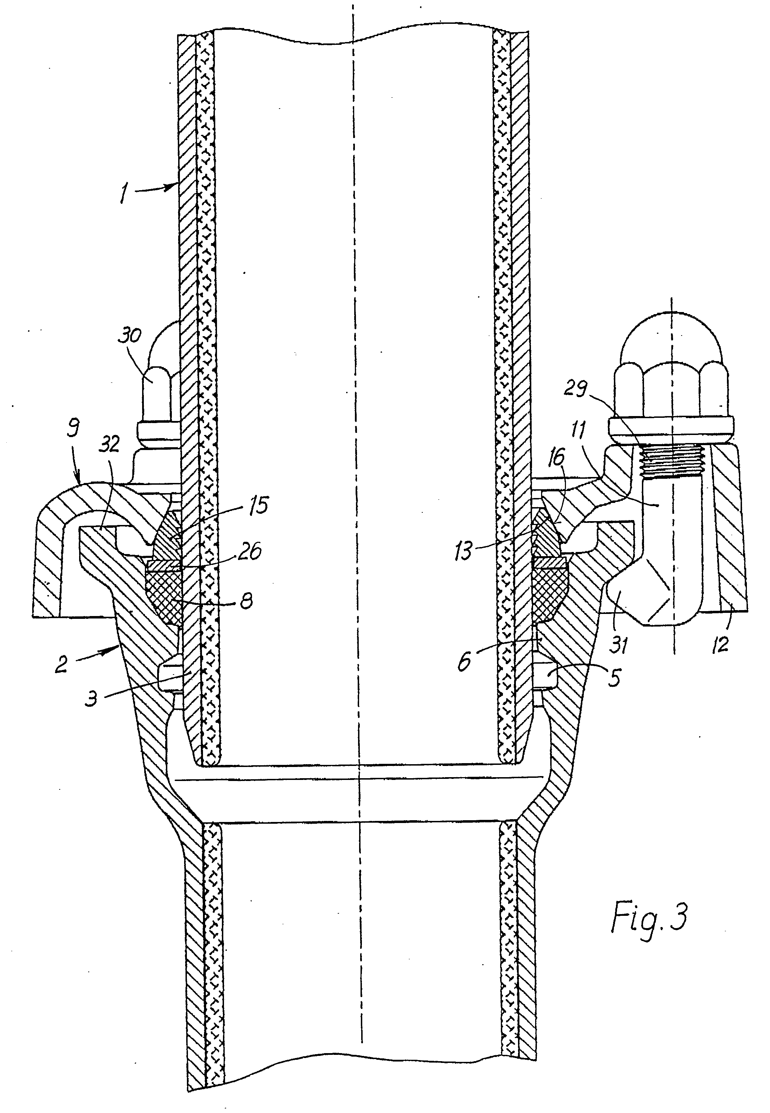

Bei der abgewandelten Ausführung nach Fig. 3 findet die Beaufschlagung des Dichtungsrings 8 in entsprechender Weise ausgehend von der sich konisch verjüngenden Innenfläche 13 des Spannrings 9 über den Gleitring 26 statt. Diese Ausführung verzichtet jedoch auf die Abdeckung 24 gemäß Fig. 1 und weist einen entsprechend vereinfachten Aufbau auf.

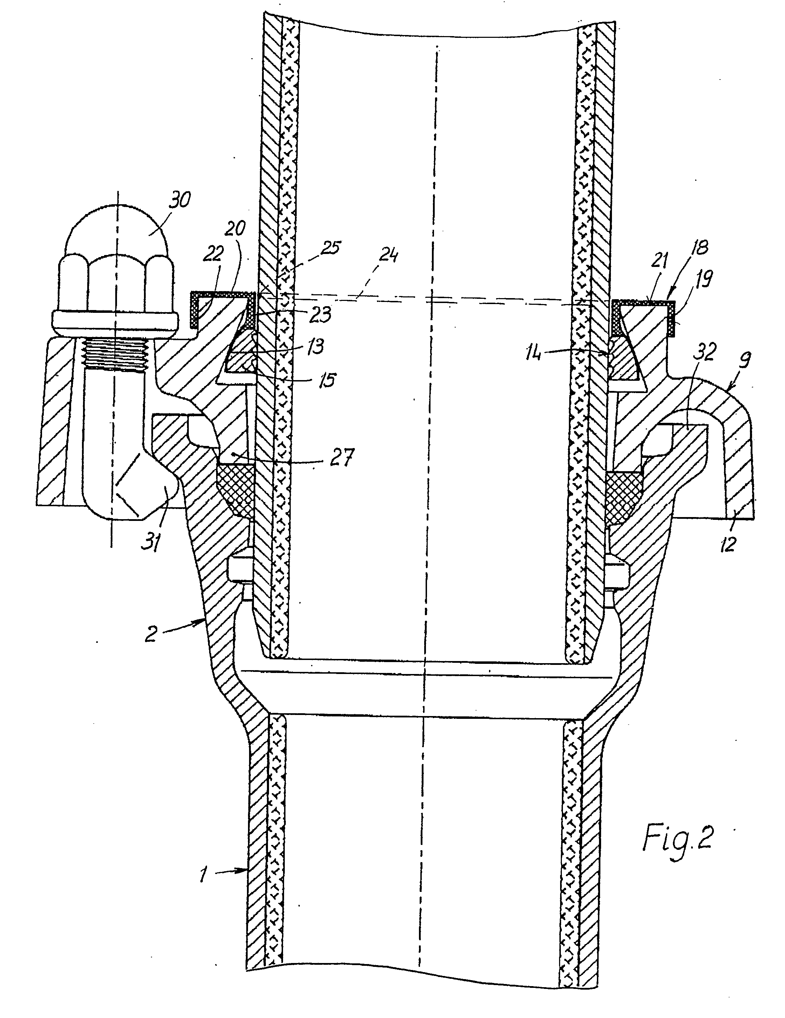

Die Ausführung nach Fig. 2 unterscheidet sich von derjenigen nach Fig. 1 durch einen zylindrischen Ringansatz 27 an der dem äußeren Ende abgewandten Seite des Spannrings 9. Dieser Ringansatz stützt sich mit einer quer zur Ringachse erstreckenden Stirnfläche 28 auf dem Dichtungsring 8 ab. Diese Ausführung hat sich insofern als günstiger im Vergleich zu denen nach den Fig. 1 und 3 erwiesen, als sich bei ihr das Maß der Beaufschlagung des Dichtungsrings leichter dosieren läßt.

Allen Ausführungen ist die Art der Festlegung des Spannrings 9 an dem Muffenende 2 eines Muffenrohres 1 gemeinsam. Übereinstimmend weisen die Spannschrauben 11 an ihrem einen Ende jeweils ein Gewinde 29 für die Aufnahme einer Spannmutter 30 und an ihrem anderen Ende eine sich quer vorerstreckende Haltenase 31 auf, die einen radial vorstehenden Muffenrand 32 des Muffen-rohres 1 hintergreift. Außerdem weist der Spannring 9 jeweils angeformte Vorsprünge 33 auf, die von den Bohrungen 10 für die Spannschrauben 11 durchsetzt sind.

## Ansprüche

1. Schubgesicherte Steckmuffenverbindungsvorrichtung, insbesondere für im Schleudergußverfahren hergestellte Muffenrohre (1), bei der das Spitzende (3) des einen Rohres mit radialem Spiel in das einen Dichtring (8) aufweisende Muffenende (2) des anderen Rohres einschiebbar ist, dem ein vom Dichtring getrennt ausgebildeter Klemmring (14) zugeordnet ist, welcher aus einer Vielzahl in Umfangsrichtung mit gegenseitigem Abstand angeordneten Klemmsegmenten (15) besteht, die eine ballig ausgebildete äußere Mantelfäche (16) aufweisen, in Umfangsrichtung jeweils durch eine anvulkanisierte Zwischenschicht aus Gummi o. dgl. miteinander verbunden sind und auf ihrer Innenfläche jeweils eine Zahnung (17) aufweisen, die bei Auftreten von axialen Kräften durch Zusammenwirken der balligen Mantelfäche (16) mit einer sich konisch zum äußeren Ende verjüngenden Innenfläche (13) radial gegen das Spitzende (3) drücken, dadurch gekennzeichnet, daß anl Muffenende (2) eine durch radiale Durchmessererweiterung der Muffeninnwand gebildete, in axialer Richtung offene Abdichtungskammer (7) für den Dichtring (8) vorgesehen ist, daß dem Muffenende (2) ein der Halterung des Klemmrings (14) und der Kompression des Dichtungsrings (8) dienender Spannring (9) zugeordnet ist, der die sich konisch zum äußeren Ende hin verjüngende Innenfläche (13) aufweist, an der die ballig ausgebildeten äußeren Mantelfächen (16) der Klemmegmente (15) des Klemmrings (14) zur Anlage gelangen, und daß dem Spannring (9) eine Mehrzahl von am Umfang gleichmäßig verteilten Spannschrauben (11) zugeordnet ist, die am Muffenende (32) angreifen und über die die axiale Position des Spannrings (9) in Bezug auf das Muffenende (2) unter Änderung des Maßes der Beaufschlagung von Klemmring (14) und/oder Dichtungsring (8) verstellbar ist.

2. Vorrichtung nach Anspruch 1, dadurch gekennzeichnet, daß der Spannring (9) an seiner dem äußeren Ende abgewandten Seite einen zylindrischen Ringansatz (27) aufweist, der sich mit einer quer zur Ringachse erstreckenden Stirnfläche (28) auf dem Dichtungsring (8) abstützt

3. Vorrichtung nach Anspruch 1, dadurch gekennzeichnet, daß sich der vom Spannring (9) beaufschlagte Klemmring (14) in axialer Richtung auf dem Dichtungsring (8) abstützt.

4. Vorrichtung nach Anspruch 1 oder 3, dadurch gekennzeichnet, daß sich der Klemmring (14) über einen zwischengeschalteten Gelitring (26) auf dem Dichtungsring (8) abstützt.

5. Vorrichtung nach einem der Ansprüche 1 bis 4, dadurch gekennzeichnet, daß an den Klemmring (14) ein am Spannring (9) festlegbares, ihn tragendes Halteteil (18) aus Elastomer angeformt ist.

6. Vorrichtung nach Anspruch 5, dadurch gekennzeichnet, daß sich an das äußere Ende der konischen Innenfläche (13) des Spannrings (9), an der die ballig ausgebildeten äußeren Mantelflächen (16) der Klemmsegmente (15) des Klemmrings (14) zur Anlage gelangen, eine sich quer zur Spannringachse erstreckende Stirnfläche (21) anschließt, die in eine etwa zylindrische Außenseite (19) übergeht, und daß das durch einen Kragen (18) gebildete Halteteil einen an der zylindrischen Außenseite (19) des Spannrings (9) zur Anlage gelangenden ringzylindrischen Abschnitt (20), einen sich anschließenden, an der Spannringstirnfläche (21) zur Anlage gelangenden ringscheibenförmigen Abschnitt (22) sowie einen sich vom Innenrand der Spannringstirnfläche zum Klemmring (14) erstreckenden Verbindungsabschnitt (23) umfaßt, der in Abhängigkeit von den Außenabmessungen des einzuführenden Spitzendes (3) zusammen mit dem Klemmring (14) aufweitbar und dabei in axialer Richtung dehnbar ist.

7. Vorrichtung nach Anspruch 5 oder 6, dadurch gekennzeichnet, daß an den Kragen (18) eine nach Festlegung des Spannrings (9) an der Rohrmuffe das Rohrinnere gegen Eintritt von Fremdkörpern bzw. Verschmutzungen schützende Abdeckung angeformt ist.

8. Vorrichtung nach Anspruch 7, dadurch gekennzeichnet, daß die Abdeckung (24) in Form einer flachen, elastischen Membran ausgebildet ist.

9. Vorrichtung nach einem der Ansprüche 6 bis 8, dadurch gekennzeichnet, daß im Bereich des Kragens (18) eine das leichte Abreissen der Abdeckung ermöglichende Materialschwächung bzw. Perforation (25) vorgesehen ist.

10. Vorrichtung nach einem der Ansprüche 1 bis 9, dadurch gekennzeichnet, daß der Spannring (9) gleichmäßig am Umfang verteilt achsparallele Bohrungen (10) zur Aufnahme der Spannschrauben (11) sowie einen sich im Abstand von und über die Stirnfläche des Muffenendes 2 erstreckenden, Biegesteifigkeit verleihenden Ringkragen (12) umfaßt.

11. Vorrichtung nach Anspruch 10, dadurch gekennzeichnet, daß der Spannring (9) am Umfang angeformte radiale Vorsprünge (33) aufweist, die von den Bohrungen (10) für die Spannschrauben (11) durchsetzt sind.

12. Vorrichtung nach den Ansprüchen 10 oder 11, dadurch gekennzeichnet, daß jede Spannschraube (11) an ihrem einen Ende in ein Gewinde (29) zur Aufnahme einer Spannmutter (30) und an ihrem anderen Ende in eine sich quer vorerstreckende Haltenase (31) ausläuft, die einen radial vorstehenden Muffenrand (32) des Muffenrohres hintergreift.

Fig.1

Fig.2

EP 0 334 380 A2

Fig. 3